# EUROPÄISCHE PATENTSCHRIFT

(11) **EP 4 551 438 B1**
(45) Veröffentlichungstag und Bekanntmachung des Hinweises auf die Patenterteilung: **09.12.2026**
(21) Anmeldenummer: 23739110.7
(22) Anmeldetag: 28.06.2023
(51) Int. Cl.: B60T 1/06, B60T 8/171, B60T 8/172, B60T 8/1755, B60T 8/18, B60T 8/24, B60T 13/66, B60T 13/74, B60T 17/22, F16D 51/00

(54) **VERFAHREN ZUM BETREIBEN EINER BREMSE EINES KRAFTFAHRZEUGS, BREMSANORDNUNG UND SPEICHERMEDIUM**
METHOD FOR OPERATING A BRAKE OF A MOTOR VEHICLE, BRAKE ASSEMBLY AND STORAGE MEDIUM
PROCÉDÉ D'ACTIONNEMENT D'UN FREIN D'UN VÉHICULE À MOTEUR, ENSEMBLE FREIN ET SUPPORT DE STOCKAGE

(30) Priorität: 04.07.2022 DE 102022206792; 02.09.2022 DE 102022209146
(43) Veröffentlichungstag der Anmeldung: 14.05.2025
(73) Patentinhaber: AUMOVIO Germany GmbH, 60488 Frankfurt am Main (DE)
(72) Erfinder: VEY, Christian, 30175 Hannover (DE); HOFFMANN, Jens, 30175 Hannover (DE); KRUSE, Martin, 30175 Hannover (DE); HAAG, Mathias, 30175 Hannover (DE); GÄDKE, Martin, 30175 Hannover (DE)
(74) Vertreter: Aumovio Corporation
(86) Internationale Anmeldenummer: PCT/DE2023/200131
(87) Internationale Veröffentlichungsnummer: WO 2024/008247

(56) Entgegenhaltungen:
- EP-A1- 1 763 462
- WO-A1-03/011668
- DE-A1- 102008 037 809
- DE-A1- 102015 201 556
- DE-A1- 102016 203 475
- DE-A1- 102018 203 181
- DE-A1- 102020 215 965
- US-A1- 2013 325 278
- US-B2- 10 576 956
- US-B2- 10 933 848

## Beschreibung

Die Erfindung betrifft ein Verfahren zur bremsmomentbasierten Positionsansteuerung der Parkbremse einer Betriebsbremse (TB) mit Feststellbremsfunktion eines Kraftfahrzeugs, eine zugehörige Bremsanordnung sowie ein zugehöriges Speichermedium.

Bremsen werden typischerweise in Kraftfahrzeugen verwendet, um diese gezielt zu verzögern und/oder um sie im Stand zuverlässig zu halten. Eine Bremse erzeugt typischerweise ein Bremsmoment, welches zu einer Verzögerung des Fahrzeugs und/oder zum Halten im Stand führt. Es hat sich jedoch als schwierig herausgestellt, eine Bremse im Stand so anzusteuern, dass sie zuverlässig hält und kein Nachspannen erforderlich ist.

Die DE 10 2020 215 965 A1 beschreibt ein Verfahren zum Überwachen eines Verschleißes einer elektrisch betätigten Kraftfahrzeugbremse entlang eines Verfahrwegs eines Aktuators, wobei bei einer anfänglichen Lüftspielinitialisierung ein Nullpunkt bestimmt wird und ein globaler Korrekturwert den Verschleiß während einer gesamten Einsatzdauer von Bremsbelägen überwachen kann.

Die DE 10 2016 010 823 A1 beschreibt ein Verfahren zum Betreiben einer Fahrzeugbremse, wobei die Fahrzeugbremse eine Betriebsbremse mit einem Betätigungskolben umfasst, der zum Erzeugen einer Bremskraft unter Einwirkung eines Hydraulikdrucks in eine Betätigungsposition bewegbar ist, und wobei die Fahrzeugbremse ferner eine Feststellbremseinheit umfasst, die dazu ausgebildet ist, sich über einen ersten Bewegungsbereich ohne ein Erzeugen einer Bremskraft zu bewegen, und die ferner dazu ausgebildet ist, sich über einen zweiten Bewegungsbereich zu bewegen, in dem sie sich an dem Betätigungskolben unter Verändern einer Bremskraft abstützt, wobei der erste und zweite Bewegungsbereich in einem Abstützpunkt ineinander übergehen, wobei das Verfahren im drucklosen Zustand oder bei einem Hydraulikdruck unterhalb ei/nes vorbestimmten Schwellenwertes durchgeführt wird und die folgenden Schritte umfasst: Bewegen der Feststellbremseinheit von dem ersten in den zweiten Bewegungsbereich oder umgekehrt; Erfassen eines Verlaufs des Strombedarf der Feststellbremseinheit während des Schritts a); Ermitteln einer Lage des Abstützpunktes anhand des Verlaufs des Strombedarfs.

Die DE 10 2010 063 359 A1 beschreibt ein Verfahren zum Einstellen der von einer Feststellbremse ausgeübten Klemmkraft, die von einer elektromechanischen Bremsvorrichtung und bedarfsweise ergänzend von einer hydraulischen Bremsvorrichtung erzeugt wird, wobei der hydraulische Druck ermittelt und dem Druck ein Druckreferenzweg zugeordnet wird, welcher mit einem Aktuatorweg verglichen wird.

Die DE 10 2013 218 401 A1 beschreibt ein Verfahren zum Betrieb eines Kraftfahrzeugs, wobei wenigstens ein autonomer oder teilautonomer Betrieb des Kraftfahrzeugs aktivierbar ist und das Kraftfahrzeug eine Betriebsbremse und eine Parkbremse aufweist, welche in Reaktion auf einen erkannten Betriebszustand des Kraftfahrzeugs die Parkbremse aus einem Ruhezustand in einen vorbestimmen Betriebszustand verlagert, wobei der vorbestimmte Betriebszustand der Parkbremse derart bestimmt ist, dass die Parkbremse keine oder eine gegenüber der Vollaktivierung deutlich geringere Bremswirkung erzeugt.

In US 2016053839 A1 wird dargelegt, dass basierend auf der Betätigungsenergie eines Aktuators auf ein Bremsmoment der Reibungsbremse geschlossen werden könne. Dabei vernachlässigt diese Vorgehensweise sämtliche Einflussfaktoren, die während der Nutzung der Bremse und über deren Lebenszeit stark unterschiedlich bzw. nichtlinear variieren. Hierzu zählen z.B. C*, Wirkungsgrad(verluste), Reibung(sverluste) über den gesamten Antriebsstrang, Variation von Bauteilsteifigkeiten über deren Verschleißzustand, starke Variation eines Reibwerts zwischen Bremsbelag und Bremsscheibe sowie viele weitere Einflüsse mehr. Weil besagte Effekte unvorhersehbar, stochastisch und teilweise stark nichtlinear verteilt auftreten ist demzufolge keinerlei präzise Bremsregulierung ermöglicht, sondern bestenfalls eine grobe Abschätzung.

Es ist eine Aufgabe der Erfindung, ein Verfahren zum Betreiben einer Bremse eines Kraftfahrzeugs bereitzustellen, welches im Vergleich zu bekannten Ausführungen alternativ oder besser ausgeführt ist. Es ist des Weiteren eine Aufgabe der Erfindung, eine zugehörige Bremsanordnung bereitzustellen. Außerdem ist es eine Aufgabe der Erfindung, ein zugehöriges Speichermedium bereitzustellen.

Dies wird erfindungsgemäß durch ein Verfahren, eine Bremsanordnung sowie ein Speichermedium gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Betreiben einer Bremse eines Kraftfahrzeugs. Die Bremse weist einen Aktuator auf, welcher Positionen entlang eines Wegs anfährt und abhängig davon ein Bremsmoment erzeugt. Das Verfahren weist folgende Schritte auf:
- während das Kraftfahrzeug fährt, Aufnehmen einer Bremsmoment-Weg-Kennlinie der Bremse, und
- zum Halten des Kraftfahrzeugs im Stand mit einem vorgegebenen Bremsmoment,
   - Ermitteln einer zum vorgegebenen Bremsmoment korrespondierenden Position mittels der aufgenommenen Bremsmoment-Weg-Kennlinie, und
   - Anfahren der korrespondierenden Position mittels des Aktuators.

Mittels der hierin beschriebenen Vorgehensweise kann eine typische Betriebsbremsung verwendet werden, um eine Bremsmoment-Weg-Kennlinie aufzuzeichnen. Derartige Betriebsbremsungen werden bei einem typischen Betrieb eines Kraftfahrzeugs regelmäßig durchgeführt. Die gewonnene Bremsmoment-Weg-Kennlinie kann dann verwendet werden, um im Stand eine geeignete Position des Aktuators anzufahren, ohne dass hierfür separate Messungen erforderlich wären. Man kann sich dann darauf verlassen, dass die Bremse nach Anfahren der Position durch den Aktuator das erforderliche Bremsmoment aufbringen kann.

Die Bremse kann insbesondere als Bestandteil eines Kraftfahrzeugs angesehen werden. Sie ist jedoch grundsätzlich ein darin enthaltenes, auch eigenständig handhabbares Bauteil. Der Weg kann beispielsweise entlang einer linearen Strecke vorgegeben sein. Die Bremsmoment-Weg-Kennlinie kann beispielsweise jeder Position oder mehreren Positionen entlang des Wegs jeweils ein Bremsmoment zuordnen. Das Bremsmoment wird typischerweise gemessen, beispielsweise in einem Abstützlager. Auch ein Zuordnen von Positionen zu Bremsmomenten ist möglich. Die Bremsmoment-Weg-Kennlinie kann insbesondere tabellarisch oder als Funktion angegeben sein.

Auf eine Messung des Bremsmoments während des Haltens des Kraftfahrzeugs im Stand kann bei der hierin beschriebenen Ausführung vorteilhaft verzichtet werden.

Die Bremsmoment-Weg-Kennlinie kann insbesondere während einer Betriebsbremsung aufgenommen werden. Dadurch ist es nicht erforderlich, zusätzliche Bremsvorgänge auszulesen, nur um eine Bremsmoment-Weg-Kennlinie aufzunehmen. Betriebsbremsungen dienen typischerweise zum Abbremsen eines Kraftfahrzeugs aufgrund von allgemeiner Verkehrslage, straßenverkehrsrechtlichen Vorschriften oder Gefahrsituationen. Sie kommen beim Betrieb eines Kraftfahrzeugs, insbesondere auf öffentlichem Grund, regelmäßig vor. Sie können insbesondere dadurch ausgelöst werden, dass ein Fahrer ein Bremspedal tritt oder eine Fahrassistenzfunktion eine Bremsung anfordert.

Das Fahrzeug kann insbesondere ansprechend auf eine Aktivierung einer Parkbremsfunktionalität im Stand gehalten werden. Diese kann beispielsweise mittels eines Schalters oder eines Tasters ausgelöst werden. Damit kann der Fahrer typischerweise anzeigen, dass das Fahrzeug geparkt werden soll, also für die nächste Zeit nicht mehr bewegt werden soll.

Das vorgegebene Bremsmoment kann insbesondere basierend auf einem Betriebszustand des Fahrzeugs ermittelt werden. Damit können beispielsweise Komponenten wie Beladung, Schräge des Untergrunds, Temperatur oder Abnutzung der Bremsen berücksichtigt werden.

Die Bremsmoment-Weg-Kennlinie kann insbesondere in vorgegebenen Zeitabständen und/oder in vorgegebenen Betriebszuständen aufgenommen werden. Beispielsweise kann immer nach Ablauf eines vorgegebenen Zeitabstands gewartet werden, bis die nächste Betriebsbremsung ausgelöst wird, und dann kann bei dieser Betriebsbremsung die Bremsmoment-Weg-Kennlinie aufgenommen werden. Sie kann auch gezielt in unterschiedlichen Betriebszuständen aufgenommen werden, beispielsweise zu unterschiedlichen Temperaturen oder bei unterschiedlichen Lastsituationen. Dies kann entsprechend bei dem Anfahren der Position zum Halten des Kraftfahrzeugs im Stand berücksichtigt werden. Beispielsweise kann zum Halten des Kraftfahrzeugs im Stand eine Bremsmoment-Weg-Kennlinie verwendet werden, welche bei äquivalenten Betriebsparametern aufgenommen wurde, beispielsweise bei gleicher Temperatur oder bei einer Temperatur in einem vorgegebenen Band um die aktuelle Temperatur.

Insbesondere kann vorgesehen sein, dass nach dem Anfahren der korrespondierenden Position kein Nachspannen erfolgt, während das Kraftfahrzeug im Stand gehalten wird. Durch die hierin beschriebene Vorgehensweise kann sichergestellt werden, dass ausreichend Bremskraft zur Verfügung steht, um das Kraftfahrzeug im Stand zu halten. Auf ein Nachspannen kann somit verzichtet werden. Insbesondere kann darauf verzichtet werden, Mittel zum Nachspannen bereitzustellen, welche beispielsweise zusätzliche Sensorik und/oder Überwachungsfunktionalitäten benötigen würden.

Insbesondere kann das Bremsmoment mittels eines Bremskraftsensors gemessen werden. Dieser kann sich beispielsweise in einem Abstützlager einer Trommelbremse befinden. Die Position kann insbesondere mittels eines Positionssensors, insbesondere eines Motorpositionssensors, gemessen werden. Dadurch kann die Position gezielt eingeregelt werden. Alternativ kann die Position auch deterministisch beispielsweise aus Umdrehungen eines Elektromotors abgeleitet werden.

Insbesondere kann der Aktuator ein elektromagnetischer Aktuator sein. Dies hat sich für typische Anwendungen als vorteilhaft herausgestellt. Auch andere Arten von Aktuatoren können jedoch verwendet werden.

Die Erfindung betrifft des Weiteren eine Bremsanordnung für ein Kraftfahrzeug. Die Bremsanordnung weist einen Aktuator und eine elektronische Steuerungsvorrichtung auf, welche dazu konfiguriert ist, ein Verfahren wie hierin beschrieben auszuführen. Bezüglich des Verfahrens kann auf alle beschriebenen Ausführungen und Varianten zurückgegriffen werden.

Die Erfindung betrifft des Weiteren ein nichtflüchtiges computerlesbares Speichermedium, welches Programmcode enthält, bei dessen Ausführung ein Prozessor ein Verfahren wie hierin beschrieben ausführt. Bezüglich des Verfahrens kann auf alle hierin beschriebenen Ausführungen und Varianten zurückgegriffen werden.

Das hierin beschriebene Verfahren kann insbesondere für elektromechanische Trommelbremsen angewandt werden. Die Bremsanordnung kann insbesondere eine elektromechanische Trommelbremse sein.

Mit anderen Worten können insbesondere elektromechanische Parkbremsen über einen Motorstrom gesteuert werden. Dieser weist typischerweise eine Korrelation zur Spreizkraft auf. Aufgrund von Wirkungsgradschwankungen im Getriebe kann bei der Spreizkraftbestimmung basierend auf dem Motorstrom eine große Streuung auftreten. Die Spreizkraft wird typischerweise benötigt, um mit einem geschätzten Reibwert das mögliche maximale Bremsmoment zu bestimmen, das größer sein soll als das erforderliche Hangabtriebsmoment, um das Fahrzeug sicher zu halten. Durch die Verkettung von Motorstrom über Spreizkraft bis hin zum Bremsmoment kann eine sehr hohe Streuung des eingestellten Bremsmoments vorhanden sein.

Dies kann zu einer Überbelastung der Bauteile bzw. zu einer notwendigen Erhöhung der Robustheit der Bauteile führen.

Die hierin beschriebene Ausführung kann insbesondere zur Identifikation einer Parkbremsansteuerung für elektromechanische Trommelbremsen verwendet werden. Durch eine erhöhte Anzahl von Sensoren können insbesondere neue Lösungsmöglichkeiten ermöglicht werden, beispielsweise um die Nachteile der erhöhten Belastung und der Unsicherheit des garantierten Fahrzeughaltens bekannter elektrischer Parkbremssysteme zu reduzieren.

Insbesondere kann bei elektromechanischen Trommelbremsen, die eine Bremsmomentmessung aufweisen und welche typischerweise einen Motorpositionssensor besitzen, eine Motorposition-Bremsmoment-Kennlinie erzeugt werden. Dies kann als synonymer Begriff für eine Bremsmoment-Weg-Kennlinie betrachtet werden. Die Parkbremsansteuerung kann basierend auf einer Weg-Bremsmoment-Kennlinie erfolgen. Auch dies kann als synonymer Begriff für eine Bremsmoment-Weg-Kennlinie betrachtet werden.

Durch die bremsmomentbasierte Positionssteuerung der Parkbremse ergeben sich insbesondere die Vorteile einer erhöhten Hanghaltesicherheit, der fehlenden Notwendigkeit einer Top-of-Force-Kompensation mit zugehöriger Reduktion des Softwareaufwands, einer Vermeidung von erhöhtem Überspannen des Systems mit Reduktion des Lastprofils durch präzisere Ansteuerung und Reduktion der Robustheitsanforderung unter Erhöhung der Zyklenzahl, sowie diverse Diagnosemöglichkeiten.

Weitere Merkmale und Vorteile wird der Fachmann dem nachfolgend mit Bezug auf die beigefügte Zeichnung beschriebenen Ausführungsbeispiel entnehmen. Dabei zeigt:
Fig. 1: eine Bremsanordnung,
Fig. 2: die Bremsanordnung von Fig. 1 in einer anderen Ansicht,
Fig. 3: eine Bremsmoment-Weg-Kennlinie, und
Fig. 4: ein Blockschaltbild.

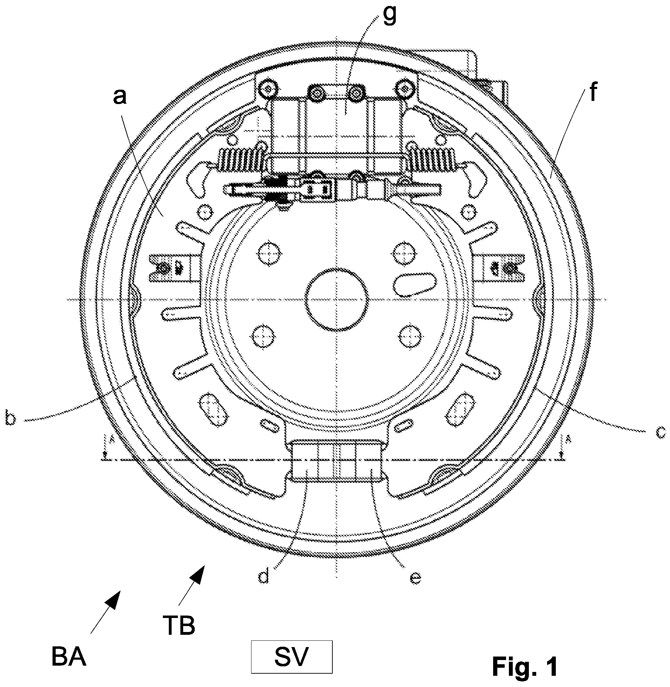

Fig. 1 zeigt eine Bremsanordnung BA mit einer Trommelbremse TB und einer Steuerungsvorrichtung SV. Die Steuerungsvorrichtung SV ist dazu konfiguriert, ein erfindungsgemäßes Verfahren gemäß einer Ausführung auszuführen. Hierauf wird weiter unten näher eingegangen.

Die Trommelbremse TB kann insbesondere als Betriebsbremse mit Feststellbremsfunktion verstanden werden.

Die Trommelbremse TB weist eine Rückenplatte a auf, auf welcher Bremsbacken b, c gelagert sind. Diese sind innerhalb einer Bremstrommel f angeordnet. Die Trommelbremse TB weist des Weiteren eine Spreizeinheit g auf, welche die Bremsbacken b, c an die Innenseite der Bremstrommel f drückt. Reaktionskräfte der Bremsbacken b, c stützen sich dabei an Abstützlagern d, e ab. Diese sind mit Kraftsensoren ausgerüstet, wodurch durch Verrechnung der beiden von den Kraftsensoren gelieferten Größen ein Bremsmoment ermittelt werden kann.

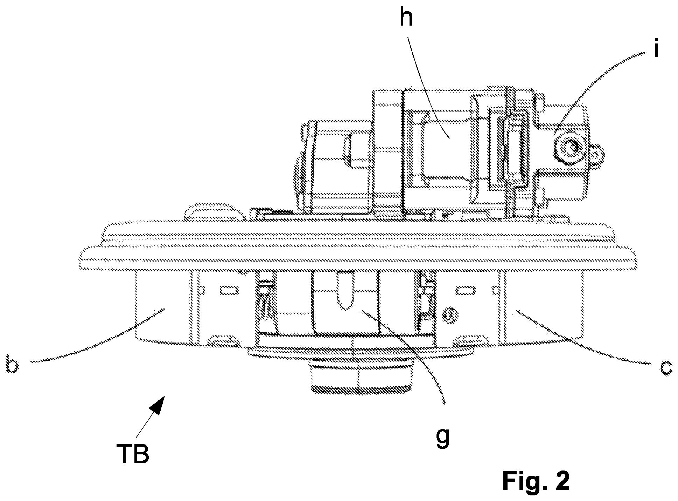

Fig. 2 zeigt eine Draufsicht auf die Trommelbremse TB. Darin ist zu erkennen, dass die Spreizeinheit g zum Antrieb einen Aktuator h aufweist, welcher wiederum einen Motorpositionssensor i aufweist. Der Aktuator h ist beispielhaft als bürstenloser Gleichstrommotor ausgeführt, der elektrisch kommutiert wird.

Die Messung des Bremsmoments bildet eine Voraussetzung für die weiteren hierin offenbarten Verfahrensschritte und kann beispielsweise auch auf andere Art und Weise umgesetzt werden.

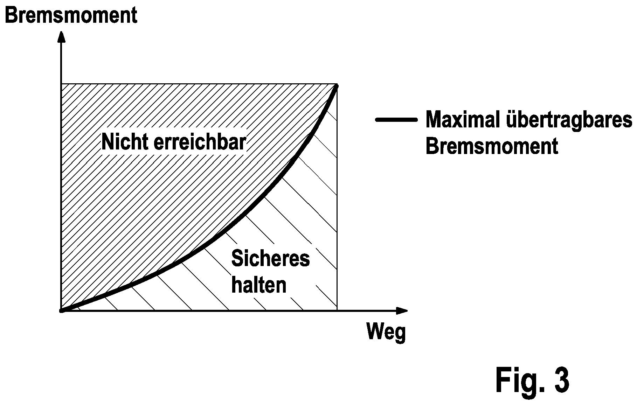

Durch die Messung der beiden Größen Bremsmoment und Motorposition ist die Ermittlung einer Motorpositions-Bremsmoment-Kennlinie, auch als Bremsmoment-Weg-Kennlinie bezeichnet, während der Nutzung der Betriebsbremse (während der Fahrt) möglich. Diese kann permanent kalibriert werden, insbesondere während Betriebsbremsungen, da aufgrund von Verschleiß und Reibwertvariation eine Veränderung der Kennlinie auftreten kann. Die während der Fahrt ermittelten Kennlinien stellen eine Grenzsituation in der Bremsmoment-Weg-Kennlinie dar, bei der in Abhängigkeit der Motorposition ein eindeutiges Bremsmoment erzeugt wird. Dies ist beispielsweise in Fig. 3 dargestellt. Dieses ist für den aktuellen Zustand (Verschleiß, Reibwert) des maximal möglichen Bremsmoments an gegebener Position gültig. Im Stillstand (Parken) ist dieser Zusammenhang nicht mehr gegeben, da das von der Bremse erzeugte Bremsmoment nur so hoch ist wie das von außen wirkende Lastmoment (insbesondere Hangabtriebsmoment). Somit ist das erzeugte Bremsmoment im Stillstand nicht durch die Motorposition zu beeinflussen, solange sich der aktuelle Zustand unterhalb der Grenzkennlinie befindet. Dieser Bereich ist in Fig. 3 als "sicheres Halten" bezeichnet.

Ist für ein Fahrzeug eindeutig definiert, welches Bremsmoment in der jeweiligen Situation für Sicheres Halten erforderlich ist, ist somit auch die entsprechende Motorposition bekannt. Diese kann über einen Motorpositionsregler eingeregelt werden, so dass die Parkbremse diese Position dauerhaft stromlos hält.

Durch die Bremsmoment-Weg-Kennlinie kann eine Prädiktion des sicher gehaltenen Bremsmoments ermöglicht werden. Nachspannstrategien werden bei dem Verfahren typischerweise nicht mehr benötigt. Ein Überspannen des Systems wird ebenfalls verhindert, insbesondere aufgrund der präzisen Voraussage und Ansteuerung.

Durch die Messung von Motorposition, Bremsmoment und Strom kann eine Überprüfung des Systems ermöglicht werden, wodurch eine Diagnosefähigkeit gegeben ist. Hierdurch ist zum Beispiel bei zu hohem Strombedarf ein Rückschluss auf den Wirkungsgrad zu ziehen.

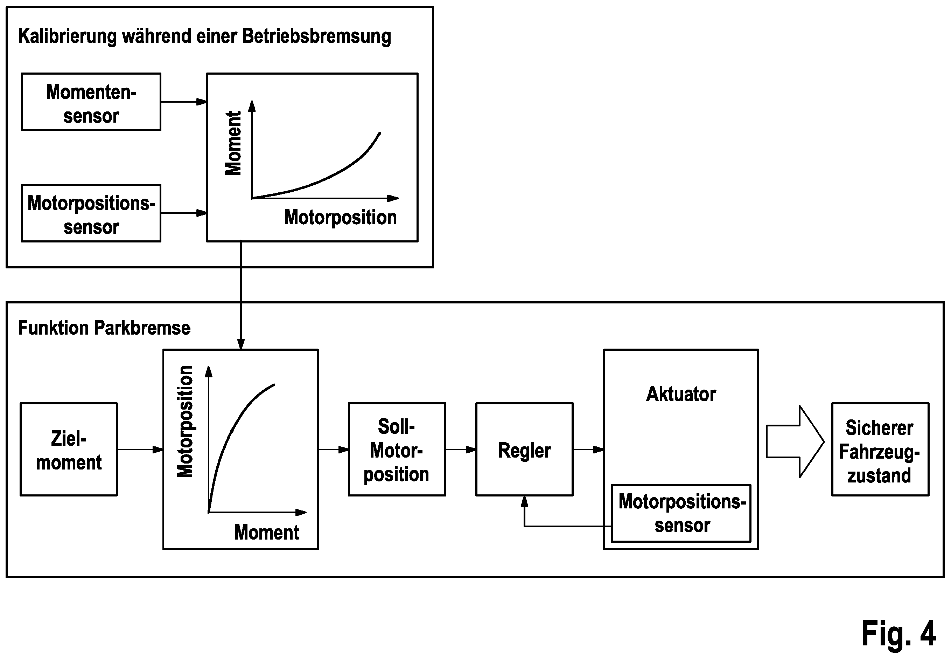

Fig. 4 zeigt ein Blockschaltbild des Verfahrens. Dabei ist oben zunächst eine Kalibrierung während einer Betriebsbremsung dargestellt. Über einen Momentensensor und einen Motorpositionssensor wird eine Kennlinie ähnlich zu derjenigen von Fig. 3 ermittelt, welche das Bremsmoment einer jeweiligen Motorposition, auch als Weg bezeichnet, zuordnet.

Im untenstehenden Block ist die Funktion einer Parkbremse dargestellt. Zunächst wird ein Zielmoment vorgegeben, welches letztlich das gewünschte maximale Bremsmoment zum Halten des Fahrzeugs im Stillstand darstellt. Basierend auf der weiter oben ermittelten Kennlinie wird eine Soll-Motorposition ermittelt. Diese wird einem Regler zugeführt, welcher wiederum einen Aktuator ansteuert. Der Aktuator kann insbesondere als Elektromotor ausgebildet sein. Er wird durch einen Motorpositionssensor überwacht, welcher eine Eingangsgröße des Reglers liefert. Ist die Soll-Motorposition erreicht, ist ein sicherer Fahrzeugzustand gegeben.

Insgesamt kann durch die hierin beschriebene Vorgehensweise Aufwand eingespart werden und es kann trotzdem ein sicheres Halten des Kraftfahrzeugs im Stand sichergestellt werden.

Erwähnte Schritte des erfindungsgemäßen Verfahrens können in der angegebenen Reihenfolge ausgeführt werden. Sie können jedoch auch in einer anderen Reihenfolge ausgeführt werden, soweit dies technisch sinnvoll ist. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

### Bezugszeichenliste

- BA: Bremsanordnung
- TB: Trommelbremse
- SV: Steuerungsvorrichtung
- a: Rückenplatte
- b, c: Bremsbacken
- d, e: Abstützlager
- f: Bremstrommel
- g: Spreizeinheit
- h: Aktuator
- i: Motorpositionssensor

## Patentansprüche

1. Verfahren zur bremsmomentbasierten Positionsansteuerung der Parkbremse einer Betriebsbremse (TB) mit Feststellbremsfunktion eines Kraftfahrzeugs,
wobei die Bremse (TB) einen Aktuator (h) aufweist, welcher Positionen entlang eines Wegs anfährt und abhängig davon ein Bremsmoment erzeugt,
wobei das Verfahren folgende Schritte aufweist:
- während das Kraftfahrzeug fährt, Aufnehmen einer Bremsmoment-Weg-Kennlinie der Bremse (TB), und
- zum Halten des Kraftfahrzeugs im Stand mit einem vorgegebenen Bremsmoment,
- Ermitteln einer zum vorgegebenen Bremsmoment korrespondierenden Position mittels der aufgenommenen Bremsmoment-Weg-Kennlinie, und
- Anfahren der korrespondierenden Position mittels des Aktuators (h).

2. Verfahren nach Anspruch 1,
- wobei die Bremsmoment-Weg-Kennlinie während einer Betriebsbremsung aufgenommen wird.

3. Verfahren nach einem der vorhergehenden Ansprüche,
- wobei das Fahrzeug ansprechend auf eine Aktivierung einer Parkbremsfunktionalität im Stand gehalten wird.

4. Verfahren nach einem der vorhergehenden Ansprüche,
- wobei das vorgegebene Bremsmoment basierend auf einem Betriebszustand des Fahrzeugs ermittelt wird.

5. Verfahren nach einem der vorhergehenden Ansprüche,
- wobei die Bremsmoment-Weg-Kennlinie in vorgegebenen Zeitabständen und/oder in vorgegebenen Betriebszuständen aufgenommen wird.

6. Verfahren nach einem der vorhergehenden Ansprüche,
- wobei nach dem Anfahren der korrespondierenden Position kein Nachspannen erfolgt, während das Kraftfahrzeug im Stand gehalten wird.

7. Verfahren nach einem der vorhergehenden Ansprüche,
- wobei das Bremsmoment mittels eines Bremskraftsensors gemessen wird, und/oder
- wobei eine Position mittels eines Motorpositionssensors (i) gemessen wird.

8. Verfahren nach einem der vorhergehenden Ansprüche,
- wobei der Aktuator (h) ein elektromagnetischer Aktuator ist.

9. Bremsanordnung (BA) für ein Kraftfahrzeug, aufweisend
- einen Aktuator (h), und
- eine elektronische Steuerungsvorrichtung (SV), welche dazu konfiguriert ist, ein Verfahren nach einem der vorhergehenden Ansprüche auszuführen.

10. Nichtflüchtiges computerlesbares Speichermedium, welches Programmcode enthält, bei dessen Ausführung ein Prozessor ein Verfahren nach einem der Ansprüche 1 bis 8 ausführt.

## Claims

1. A method for braking-torque-based position control of the parking brake of a service brake (TB) with holding brake function of a motor vehicle,
wherein the brake (TB) comprises an actuator (h), which moves to positions along a path and generates a braking torque depending on the positions, wherein the method comprises the following steps:
- recording a braking torque-travel characteristic curve of the brake (TB) while the motor vehicle is travelling, and
- for keeping the motor vehicle stationary using a specified braking torque,
- ascertaining a position corresponding to the specified braking torque by means of the recorded braking torque-travel characteristic curve, and
- moving to the corresponding position by means of the actuator (h).

2. The method as claimed in claim 1,
- wherein the braking torque-travel characteristic curve is recorded during a service braking operation.

3. The method as claimed in any one of the preceding claims,
- wherein the vehicle is kept stationary in response to activation of a parking brake functionality.

4. The method as claimed in any one of the preceding claims,
- wherein the specified braking torque is ascertained based on an operating state of the vehicle.

5. The method as claimed in any one of the preceding claims,
- wherein the braking torque-travel characteristic curve is recorded at specified time intervals and/or in specified operating states.

6. The method as claimed in any one of the preceding claims,
- wherein, after the corresponding position has been moved to, no adjustment takes place, while the motor vehicle is kept stationary.

7. The method as claimed in any one of the preceding claims,
- wherein the braking torque is measured by means of a brake force sensor, and/or
- wherein a position is measured by means of a motor position sensor (i).

8. The method as claimed in any one of the preceding claims,
- wherein the actuator (h) is an electromagnetic actuator.

9. A brake assembly (BA) for a motor vehicle, comprising
- an actuator (h), and
- an electronic control device (SV), which is configured to execute a method as claimed in any one of the preceding claims.

10. A non-volatile, computer-readable storage medium containing program code that, when executed, results in a processor executing a method as claimed in any one of claims 1 to 8.

## Revendications

1. Procédé de commande de position du frein de stationnement d'un frein de service (TB) avec fonction de frein de stationnement d'un véhicule automobile basé sur le couple de freinage,
dans lequel le frein (TB) présente un actionneur (h) qui se déplace vers des positions le long d'une trajectoire et génère un couple de freinage en fonction de celle-ci, dans lequel le procédé présente les étapes suivantes :
- pendant que le véhicule automobile est en mouvement, l'enregistrement d'une courbe caractéristique couple de freinage-déplacement du frein (TB), et
- le maintien du véhicule automobile à l'arrêt avec un couple de freinage spécifié,
- la détermination d'une position correspondant au couple de freinage spécifié au moyen de la courbe caractéristique couple de freinage-déplacement enregistrée,
et
- le déplacement vers la position correspondante au moyen de l'actionneur (h).

2. Procédé selon la revendication 1,
- dans lequel la courbe caractéristique couple de freinage-déplacement est enregistrée pendant un freinage de service.

3. Procédé selon l'une quelconque des revendications précédentes,
- dans lequel le véhicule automobile est maintenu à l'arrêt en réponse à une activation de la fonction de frein de stationnement.

4. Procédé selon l'une quelconque des revendications précédentes,
- dans lequel le couple de freinage spécifié est déterminé sur la base des conditions de fonctionnement du véhicule.

5. Procédé selon l'une quelconque des revendications précédentes,
- dans lequel la courbe caractéristique couple de freinage-déplacement est enregistrée à intervalles de temps spécifiées et/ou dans des conditions de fonctionnement spécifiées.

6. Procédé selon l'une quelconque des revendications précédentes,
- dans lequel aucun resserrage n'est réalisé une fois la position correspondante atteinte, lorsque le véhicule est maintenu à l'arrêt.

7. Procédé selon l'une quelconque des revendications précédentes,
- dans lequel le couple de freinage est mesuré au moyen d'un capteur de force de freinage, et/ou
- dans lequel une position est mesurée au moyen d'un capteur de position de moteur (i).

8. Procédé selon l'une quelconque des revendications précédentes,
- dans lequel l'actionneur (h) est un actionneur électromagnétique.

9. Ensemble de freinage (BA) pour véhicule automobile, présentant
- un actionneur (h), et
- un dispositif de commande électronique (SV) configuré pour exécuter un procédé selon l'une quelconque des revendications précédentes.

10. Support de stockage non volatil, lisible par ordinateur, contenant un code de programme dont l'exécution amène un processeur à exécuter un procédé selon l'une quelconque des revendications 1 à 8.
